# EUROPÄISCHE PATENTSCHRIFT

(11) **EP 0 784 507 B1**
(45) Veröffentlichungstag und Bekanntmachung des Hinweises auf die Patenterteilung: **26.01.2000**
(21) Anmeldenummer: 95933421.0
(22) Anmeldetag: 22.09.1995
(51) Int. Cl.: B01J 35/04

(54) **MIKROSTRUKTUREN IN GEKREUZTER ANORDNUNG**
MICROSTRUCTURES IN AN INTERSECTING ARRANGEMENT
MICROSTRUCTURES CROISEES

(30) Priorität: 26.09.1994 DE 4434363; 07.10.1994 DE 4435913
(43) Veröffentlichungstag der Anmeldung: 23.07.1997
(73) Patentinhaber: Emitec Gesellschaft für Emissionstechnologie mbH, 53797 Lohmar (DE)
(72) Erfinder: BODE, Hans, D-42798 Remscheid (DE); MARTIN, Udo, D-42103 Wuppertal (DE)
(74) Vertreter: Kahlhöfer, Hermann, Dipl.-Phys.
(86) Internationale Anmeldenummer: EP9503759
(87) Internationale Veröffentlichungsnummer: WO9609892

(56) Entgegenhaltungen:
- EP-A- 0 201 614
- EP-A- 0 389 750
- DE-U- 8 900 467
- GB-A- 2 029 720

## Beschreibung

Diese Erfindung bezieht sich auf einen metallischen Wabenkörper mit einer Vielzahl von für ein Fluid in einer Strömungsrichtung durchströmten Kanälen aus Blechen, die zumindest teilweise mit mindestens einer ersten die Kanäle bildenden Makrostruktur versehen sind, die die Wabenform bestimmt, wobei zumindest ein Teil der Bleche zumindest in Teilbereichen mit zusätzlichen Mikrostrukturen versehen ist und die Mikrostrukturen in einem Winkel zur Strömungsrichtung verlaufen und in Abständen aufeinander folgen.

Ein solcher metallischer Wabenkörper ist durch die EP 0 454 712 B1 bekannt.

Ein nach der EP 0 454 712 B1 ausgebildeter Wabenkörper arbeitet überaus zufriedenstellend.

Im Hinblick darauf, daß der metallische Wabenkörper mit einer katalytisch wirkenden Oberfläche versehen wird, die edelmetallhaltig ist, besteht die Bestrebung den Edelmetallanteil soweit wie möglich zu verringern, wodurch die Herstellungskosten eines Katalysators verringert werden können.

Hiervon ausgehend liegt der Erfindung die Aufgabe zugrunde, den bekannten Wabenkörper so weiter zu entwickeln, daß die katalytische Wirksamkeit des Wabenkörpers erhöht wird.

Diese Aufgabe wird erfindungsgemäß durch die Merkmale des Anspruchs 1 gelöst. Vorteilhafte Weiterbildungen sind Gegenstand der Unteransprüche.

Überraschenderweise hat sich herausgestellt, daß durch das Kreuzen der Mikrostrukturen ein zusätzlicher strömungstechnischer Effekt eintritt. Der strömungstechnische Effekt drückt sich darin aus, daß die sich kreuzenden Mikrostrukturen die Vermischung der Rand- und Kernströmung verstärkt. Hierdurch wird ein verbesserter Stoffaustausch zwischen dem Gas und der katalytisch wirkenden Oberfläche einzelner Strömungskanäle verbessert. Sowohl der Abtransport der Produkte als auch der Transport der Edukte zu der katalytisch wirksamen Oberfläche wird verbessert, da nunmehr die Strömung selbst eine Komponente aufweist, die zur Oberfläche hin gerichtet ist, so daß diese Strömungskomponente den Transport zur katalytisch wirkenden Oberfläche unterstützt wird.

Es hat sich herausgestellt, daß der Strömungseffekt abhängig von der Lage der Kreuzungspunkte ist.

Je nach dem, wo die Kreuzungspunkte liegen kommt es zu einer größeren Verstärkung der Vermischung. Kreuzen sich die Mikrostrukturen auf den Wellenbergen, so kommt es zu einem verstärkten schlingenden Verhalten der Strömung.

Das Strömungsverhalten kann auch dadurch beeinflußt werden, daß der Winkel, unter dem sich die Mikrostrukturen schneiden relativ gering ist.

Die Strömung kann sich zwischen zwei Mikrostrukturen nicht beruhigen, so daß eine intensive Durchmischung innerhalb der Strömung stattfindet.

Bei Wabenkörpern, die aus gewellten und glatten Blechen gewickelt sind, weisen erfindungsgemäß bevorzugt auch die glatten Bleche eine Mikrostruktur auf, die sich in Längsrichtung der Bleche erstreckt. Eine Ausbildung der Mikrostruktur, die sich quer zur Längsrichtung des Bleches erstreckt, wurde bisher fertigungstechnisch nicht realisiert, da die Kräfte, die zum Wickeln eines solchen glatten Bleches notwendig sind, Werkzeuge erforderlich machen, die hohe Kräfte aufbringen müssen, um ein Wickeln der Bleche zu erreichen. Außerdem war ein Knautschen der Bleche festzustellen.

Durch den Vorschlag, gekreuzte Strukturen auf glatten Blechen auszubilden, ist es nunmehr möglich, das glatte Blech ohne erhöhten Aufwand zu wickeln, wobei eine Verbesserung der Durchmischung erreicht wird. Ferner wird eine erhöhte Stabilität des Wabenkörpers erzielt. Die Querschnittsformen der Mikrostrukturen können z. B. den in der EP 0 454 712 B1 beschriebenen entsprechen.

Weitere Vorteile und Merkmale ergeben sich aus der nachfolgenden Beschreibung eines Ausführungsbeispiels. Hierbei zeigt:
- Figur 1: ein gewelltes Blech mit einer Mikrostruktur,
- Figur 2: eine zweite Ausführungsform eines gewellten Blechs mit einer Mikrostruktur und
- Figur 3: ein glattes Blech mit einer Mikrostruktur.

Ein metallischer Rahmenkörper besteht aus einer Vielzahl von für Fluid F in Strömungsrichtung R durchströmbaren Kanälen 2, die durch Bleche 3, 4 gebildet werden. Die Bleche 3 sind wellenförmig ausgebildet.

Die Bleche 4 sind glatt. Die gewellten und die glatten Bleche sind abwechselnd aufeinander angeordnet.

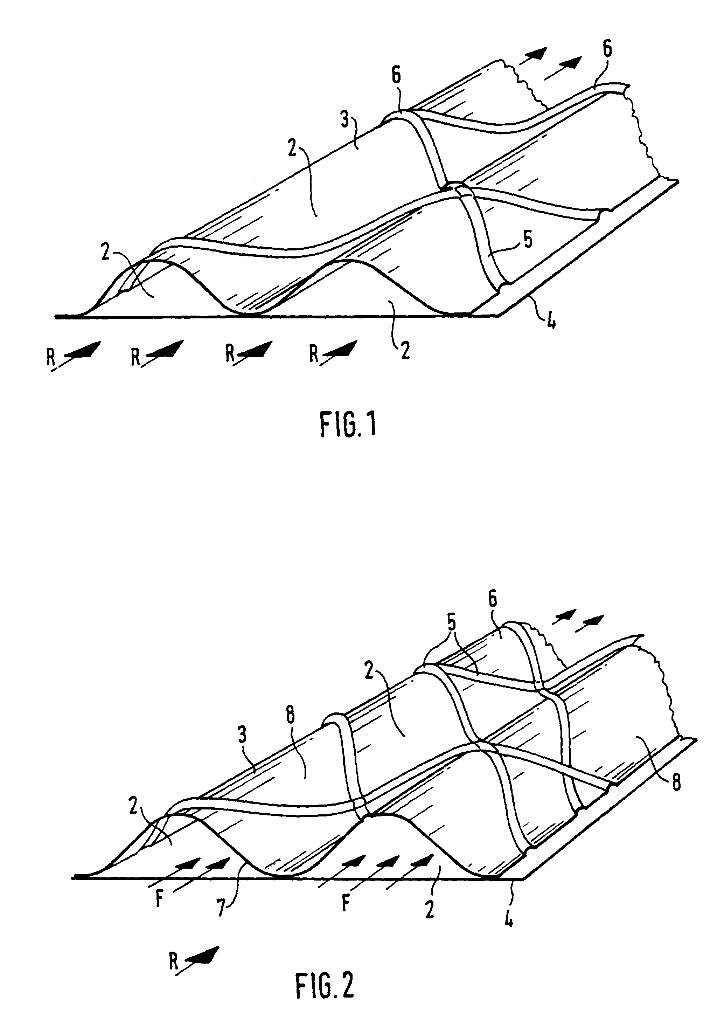

Die gewählten Bleche 3 sind mit einer Mikrostruktur 5 versehen. Bei der Mikrostruktur 5 handelt es sich um sich kreuzende streifenförmige Prägungen im gewellten Blech 3. Wie aus der Figur 1 ersichtlich kreuzen sich die Mikrostrukturen 5 auf den Wellenbergen 6.

In der Figur 2 ist eine weitere Ausführungsform dargestellt. Diese unterscheidet sich von der in der Figur 1 dargestellten Ausführungsform dadurch, daß sich die Mikrostrukturen 5 nicht nur auf den Wellenbergen 6, sondern auch im Wellenteil 7 und den Flanken 8 kreuzen.

Die sich kreuzenden Wellenstrukturen sind in einem Winkel α zur Strömungsrichtung ausgebildet.

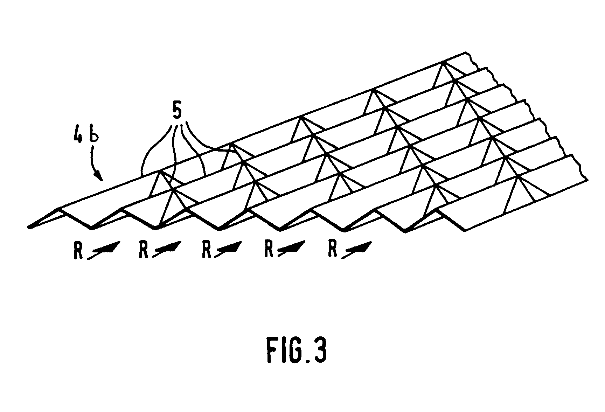

In der Figur 3 ist ein glattes Blech 4b dargestellt, welches zichharmonikaartig gefaltet ist. Das Blech 4b weist sich kreuzende Mikrostrukturen 5 auf.

Die sich kreuzenden Mikrostrukturen des Bleches erlauben, einen warmen Körper zu wickeln, was bisher nur mit in Wickelrichtung verlaufenden Strukturen möglich war.

Es ist auch möglich, einen warmen Körper dadurch auszubilden, daß ein gewelltes Blech mit Mikrostruktur mit einem glatten Blech, welches eine Mikrostruktur aufweist, kombiniert wird.

## Patentansprüche

1. Metallischer Wabenkörper mit einer Vielzahl von für ein Fluid (F) in einer Strömungsrichtung (R) durchströmbaren Kanälen (2) aus Blechen (3,4), die zumindest teilweise mit mindestens einer ersten die Kanäle (2) bildenden Makrostruktur versehen sind, welche die Wabenform bestimmt, wobei zumindest ein Teil der Bleche (3,4), zumindest in Teilbereichen mit zusätzlichen Mikrostrukturen versehen ist, und die Mikrostrukturen im Winkel (α) zur Strömungsrichtung (R) verlaufen und in Abständen aufeinanderfolgen,
**dadurch gekennzeichnet,**
daß sich die Mikrostrukturen (5) kreuzen.

2. Wabenkörper nach Anspruch 1 umfassend abwechselnde Lagen glatter und gewellter Bleche (4 bzw. 3), dadurch gekennzeichnet, daß die gewellten Bleche (3) mit Mikrostrukturen (5) versehen sind.

3. Wabenkörper nach Anspruch 2, dadurch gekennzeichnet, daß sich die Mikrostrukturen (5) auf den Wellenberg (6) kreuzen.

4. Wabenkörper nach Anspruch 2, dadurch gekennzeichnet, daß sich die Mikrostrukturen (5) im Wellental (7) kreuzen.

5. Wabenkörper nach Anspruch 2, dadurch gekennzeichnet, daß sich die Mikrostrukturen (5) auf einer oder beiden Flanken (8) der gewellten Bleche (3) kreuzen.

6. Wabenkörper nach Anspruch 2, dadurch gekennzeichnet, daß sich die Mikrostrukturen auf dem Wellenberg (6) und im Wellental (7) kreuzen.

7. Wabenkörper nach Anspruch 2, dadurch gekennzeichnet, daß sich die Mikrostrukturen auf dem Wellenberg (6) und auf wenigstens einer-Flanke (8) kreuzen.

8. Wabenkörper nach Anspruch 2, dadurch gekennzeichnet, daß sich die Mikrostrukturen im Wellental (7) und auf wenigstens einer Flanke (8) kreuzen.

9. Wabenkörper nach Anspruch 2, dadurch gekennzeichnet, daß sich die Mikrostrukturen auf dem Wellenberg (6), im Wellental (7) und auf wenigstens einer Flanke (8) kreuzen.

10. Wabenkörper nach Anspruch 2, dadurch gekennzeichnet, daß auf den glatten Blechen (4) die Mikrostruktur (5) ausgebildet ist.

## Claims

1. A metal honeycomb body with a number of channels (2) through which a fluid (F) can flow in a flow direction (R), comprising metal sheets (3, 4), at least some of which are provided with at least one first macrostructure which forms the channels (2) and determines the honeycomb shape, wherein at least some of the sheets (3, 4) are provided with additional microstructures at least in some regions, and the microstructures extend at an angle (@) to the flow direction (R) and succeed one another at intervals,
characterized in that
the microstructures (5) intersect one another.

2. The honeycomb body of claim 1, including alternating layers of smooth and corrugated sheets (4 and 3, respectively),
characterized in that
the corrugated sheets (3) are provided with microstructures (5).

3. The honeycomb body of claim 2,
characterized in that
the microstructures (5) intersect at the crest (6) of the corrugations.

4. The honeycomb body of claim 2,
characterized in that
the microstructures (5) intersect at the trough (7) of the corrugations.

5. The honeycomb body of claim 2,
characterized in that
the microstructures (5) intersect on one or both flanks (8) of the corrugated sheets (3).

6. The honeycomb body of claim 2,
characterized in that
the microstructures intersect at the crest (6) and trough (7) of the corrugations.

7. The honeycomb body of claim 2,
characterized in that
the microstructures intersect at the crest (6) of the corrugations and on at least one flank (8).

8. The honeycomb body of claim 2,
characterized in that
the microstructures insect at the trough (7) of the corrugations and on at least one flank (8).

9. The honeycomb body of claim 2,
characterized in that
the microstructures intersect at the crest (6) of the corrugations, the trough (7) of the corrugations, and on at least one flank (8).

10. The honeycomb body of claim 2,
characterized in that
the microstructure (5) is formed on the smooth sheets (4).

## Revendications

1. Corps alvéolaire métallique comportant une pluralité de canaux (2) pouvant être traversés par un fluide (F) dans un sens d'écoulement (R), constitué de tôles (3, 4) qui sont munies, au moins partiellement, d'une première macrostructure définissant la structure alvéolaire qui forme les canaux (2), une partie au moins des tôles (3, 4) étant munie, au moins dans des zones partielles, de microstructures supplémentaires, et les microstructures s'étendant suivant un angle (α) par rapport au sens d'écoulement (R) et se succédant par intervalles,
caractérisé en ce que
les microstructures (5) se croisent.

2. Corps alvéolaire selon la revendication 1, comportant des couches alternées de tôles lisses et ondulées (4 ou 3), caractérisé en ce que les tôles ondulées (3) sont munies de microstructures (5).

3. Corps alvéolaire selon la revendication 2, caractérisé en ce que les microstructures (5) se croisent sur la crête (6) des ondulations.

4. Corps alvéolaire selon la revendication 2, caractérisé en ce que les microstructures (5) se croisent dans le creux (7) des ondulations.

5. Corps alvéolaire selon la revendication 2, caractérisé en ce que les microstructures (5) se croisent sur un ou sur les deux flancs (8) des tôles ondulées (3).

6. Corps alvéolaire selon la revendication 2, caractérisé en ce que les microstructures se croisent sur la crête (6) des ondulations et dans le creux (7) des ondulations.

7. Corps alvéolaire selon la revendication 2, caractérisé en ce que les microstructures se croisent sur la crête (6) des ondulations et sur au moins un flanc (8).

8. Corps alvéolaire selon la revendication 2, caractérisé en ce que les microstructures se croisent dans le creux (7) des ondulations et sur au moins un flanc (8).

9. Corps alvéolaire selon la revendication 2, caractérisé en ce que les microstructures se croisent sur la crête (6) des ondulations, dans le creux (7) des ondulations et sur au moins un flanc (8).

10. Corps alvéolaire selon la revendication 2, caractérisé en ce que la microstructure (5) est formée sur les tôles lisses (4).
